(19) Europäisches Patentamt
European Patent Office
Office européen des brevets

(11) Publication number: 0 329 891 A2

(12) EUROPEAN PATENT APPLICATION

(21) Application number: 88310079.4

(22) Date of filing: 26.10.88

(51) Int. Cl.[4]: C08F 8/00

(30) Priority: 23.02.88 US 159143

(43) Date of publication of application: 30.08.89 Bulletin 89/35

(84) Designated Contracting States: BE DE FR GB LU NL

(71) Applicant: PETROLITE CORPORATION
369 Marshall Avenue
Saint Louis Missouri 63119(US)

(72) Inventor: Thanedar, Shrinivas P.
7473D Hardscrapple Drive
St. Louis Missouri 63123(US)
Inventor: Naiman, Michael I.
8010 Cornell
St. Louis Missouri 63130(US)

(74) Representative: Seaborn, George Stephen et al
c/o Edward Evans & Co. Chancery House
53-64 Chancery Lane
London WC2A 1SD(GB)

(54) **End-functionalized low molecular weight polymers of ethylene.**

(57) End-functionalized low molecular weight polymers and copolymers of ethylene and alkoxylated polymers and copolymers of ethylene are prepared which have an unusually low polydispersity.

The invention provides a composition characterized by the formula

$RCH_2R_1X$

wherein R represents a polyethylene radical having an average chain length of from about 20 to about 500 carbon atoms and a polydispersity of 1.04 to 1.20; $R_1$ represents a saturated hydrocarbon radical having 2 to about 20 carbon atoms; and X represents a functional group other than a hydroxyl, ester, phosphate or phosphite group, a composition characterized by the formula

$RCH_2Y(R_1O)_{n-1}R_1X$

wherein R represents a polyethylene radical having an average chain length of from about 20 to about 500 carbon atoms and a polydispersity of 1.04 to 1.20; $R_1$ represents a saturated hydrocarbon radical having 2 to about 20 carbon atoms; X represents a functional group other than a hydroxyl group; Y represents oxygen or sulfur; and n represents 2 to about 100 and a composition characterized by the formula

$RCH_2[Y(R_1O)_{n-1}]_mR_1X$

wherein R represents an ethylene/α-olefin copolymer radical having an average chain length of from about 20 to about 500 carbon atoms and a polydispersity of 1.04 to 1.20; $R_1$ represents a saturated hydrocarbon radical having 2 to about 20 carbon atoms; X represents a functional group other than a hydroxyl group; Y represents oxygen or sulfur; n represents 2 to about 100; and m represents zero or 1.

EP 0 329 891 A2

# END-FUNCTIONALIZED LOW MOLECULAR WEIGHT POLYMERS OF ETHYLENE

## Background of the Invention

### I. Field of the Invention

This invention relates to end-functionalized low molecular weight, solid, waxy polymers and end-functionalized low molecular weight, solid, waxy alkoxylated polymers characterized by a molecular weight of from about 300 to about 7500 and an unusually narrow molecular weight distribution (i.e., low polydispersity). The end-functionalized polymers have utility as mold release agents, plastics additives, lubricants, viscosity modifiers, as components of adhesives, inks, cosmetics and coating formulations and as intermediates.

In particular, the invention relates to end-functionalized, low molecular weight polyethylenes and copolymers of ethylene with α-olefins.

### II. Prior Art

In general, there are three (3) types of compositions which are related to the end-functionalized polymers of the present invention. Such compositions are (a) oxidized polyethylene, (b) low molecular weight polyethylene and (c) end-functionalized alkanes.

The oxidized polyethylenes have multiple functional groups distributed randomly on the polyethylene chains. In contrast, the polyethylenes and ethylene/α-olefin copolymers of the present invention possess hydrocarbon chains or alkoxylated hydrocarbon chains with a single end-functional group.

The low molecular weight polyethylenes possess no functional groups on the chains and, therefore, are distinct from the polyethylenes of the present invention.

While certain end-functionalized alkanes, e.g., octadecylbromide, hexadecyldiethanolamine, eicosanoic acid, behenic acid, are well documented in the literature, there are no examples of end-functionalized polyethylenes and ethylene/α-olefin copolymers which are a mixture of end-functional polyethylenes or ethylene/α-olefin copolymers of varying chain lengths characterized by low polydispersity. Thus, the solid end-functionalized polymers of the present invention possess a distribution of carbon chains having an average length of from about 20 to about 500 carbon atoms, have a molecular weight of from about 300 to about 7500 and a polydispersity of from 1.04 to 1.20. Additionally, the end-functionalized alkanes of the literature possess carbon chains which are limited and finite, whereas the end-functionalized polymers of the present invention are comprised of a mixture of end-functionalized alkanes and the average carbon number can be varied from, as stated, about 20 to about 500. Still further, the end-functionalized alkanes of the literature are single compounds, whereas the end-functionalized polymers of the present invention are comprised of a series of end-functionalized polymers differing in carbon chain length, but within a narrow molecular weight distribution. Accordingly, the end-functionalized alkanes of the literature possess specific physical properties, i.e., specific melting point, solid point, penetration point, etc., whereas the physical properties of the end-functionalized polymers of the present invention can be varied by varying the average carbon chain length.

It is further known that various derivatives of primary alcohols may be made. Thus, the acids, esters, halides, sulfates, sulfonates, etc., may be prepared by methods known to those skilled in the art, however such derivatives were made of specific low molecular weight primary alkanols having a maximum of 30 carbon atoms. The polymer alcohol starting materials used to make the compositions of this invention, however, require special handling and reaction conditions than do the lower molecular weight primary alcohols. The special handling and special reaction conditions are required to accommodate the extremely low solubility and high melting characteristics of the polymer alcohol starting materials used to prepare the compounds of this invention.

It has been disclosed that the primary polyethylene alcohol starting materials of the present invention may be esterified or ethoxylated to form hydroxy ether polymers. It has also been disclosed that certain of the polyethylene alcohol starting materials may be subjected to sulfation and sulfonation to form sulfates and sulfonates and aminated to form amines and amine derivatives which may be quaternized, however, no

actual disclosure of how to make end-functionalized polyethylenes has been shown and there are no such disclosures relating to ethylene/α-olefin copolymer alcohol reactions.

## Summary of the Invention

In accordance with the present invention, it has been found that certain low molecular weight polyethylene alcohols and ethylene/α-olefin alcohols and certain low molecular oxyalkylated polyethylene alcohols and ethylene/α-olefin alcohols may be converted to novel, useful end-functionalized polymers by introducing a functional group which replaces the hydroxyl group of the alcohol or the hydroxyl group of the oxyalkylated alcohol.

## Description of the Preferred Embodiment

The novel, useful compositions of the invention are represented by the following formula:

$RCH_2[Y(R_1O)_{n-1}]_mR_1X$ (1)

wherein

R represents a straight or branched chain, saturated hydrocarbon radical, having an average chain length of from about 20 to about 500 carbon atoms, which is polyethylene or a copolymer of ethylene and an α-olefin copolymerizable therewith;

$R_1$ represents a straight or branched chain, saturated hydrocarbon radical having 2 to about 20 carbon atoms;

X represents a functional group other than a hydroxyl group and,when m = zero and R is polyethylene, other than an ester, phosphate or phosphite group;

Y represents oxygen or sulfur;

n represents 2 to about 100; and

m represents zero or 1.

When m represents zero, the compositions of the invention have the formula:

$RCH_2R_1X$ (2)

When m represents 1, the compositions of the invention have the formula:

$RCH_2Y(R_1O)_{n-1}R_1X$ (3)

The end-functionalized polymers of the invention are distinctively characterized by a low polydispersity of 1.04 to 1.20. "Polydispersity" is the ratio of the weight average molecular weight (Mw) to the number average molecular weight (Mn). Thus, the hydrocarbon chains which vary the most from the average chain length are present in the lowest proportion.

As used herein, "functional group", i.e., "X" as used in formulas (1), (2) and (3) means any group capable of replacing the hydroxyl group of the alcohol starting material or , when n = 2 or more and m = 1, any group capable of replacing the hydroxyl group of the oxyalkylated alcohol without cleaving the ether bond.

In more detail, in formulas 1, 2 and 3, above:

R represents a straight or branched chain, saturated, hydrocarbon radical having an average chain length of from about 20 to about 500 carbon atoms, e.g.,

$$CH_3\,(CH_2CH_2)_{p_1}(CH_2\overset{R_2}{CH})_{p_2}\quad z$$

wherein

$p_1$ represents 1 to about 500;

$p_1$ represents 1 to about 50;

$R_2$ represents hydrogen or a saturated or unsaturated hydrocarbon radical having from 1 to about 20 carbon atoms; and

z represents 10 to about 500.

Accordingly, R represents a straight or branched polyalkylene chain which is a low molecular weight

polyethylene or a random copolymer of ethylene and an α-olefin copolymerizable therewith or a block copolymer thereof. Typical α-olefins which are copolymerizable with ethylene include propene, butene, hexene, octene, octadecene and mixtures thereof.

$R_1$ represents a straight or branched chain saturated hydrocarbon radical having 2 to about 20 carbon atoms, e.g, $-CH_2-CH_2-$ or

$$-CH_2-\underset{R_2}{CH}-,$$

$(CH_2)_{18}$, $(CH_2)_{20}$ and the like.

X represents a functional group, such as halo, e.g., -Cl, -Br, -F; nitro; nitroso (-NO); isonitroso (-N:OH); cyano; cyanato (-OCN); phosphate; phosphite; phospho ($-PO_2$); phosphono ($-OP(OH)_2$); phosphino ($-PH_2$); sulfo ($-SO_3H$); amino ($-NH_2$); sulfamido ($-SO_2(NH_2)_2$); sulfamino ($-HNSO_3H$); amine oxides ($-NR_3- >O$); sulfamyl ($-O_2SNH_2$); sulfate; sulfite; sulfino ($-SO_2H$); carbonate; thiocyano (-SCN); thiol (-SH); chlorate; chlorite; mercapto and the like.

X also represents acyl ($-OCR_3$) when $R_3$ appropriately represents hydrogen or an aliphatic, aromatic or cycloaliphatic hydrocarbon radical; acyloxyl ($-OCOR_3$); carboxyl (-COOH); carbalkoxyl ($-COOR_3$); alkoxyl ($-OR_3$) and derivatives thereof; acylamido ($-HN\bullet OC\bullet R_32$); $-N(R_2)_2$, e.g., dialkylamino and the like; amido ($-COONR_3$); N-containing heterocyclyl groups containing 3 to 6 members, e.g.,

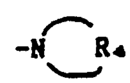

or

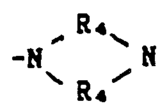

where $R_4$ represents a hydrocarbon group which may contain oxygen, e.g., $-CH_2-$, $-CH_2CH_2-$, $-O-CH_2-$; $N[-(CH_2CH_2O)_n]H$; $N-[(CH_2CH_2)_n]H$, $-CH=CH_2$; $-OC(=O)\ (CH_2)_n\ CH=CH_2$; $-SR_2$, e.g., S-alkyl, S-aryl, S-cycloalkyl and the like; $-P(R_3)_2$, $-SO_2(N(R_3)_2)_2$; $-HNSO_3R_3$; $-O_2SN(R_3)_2$; $-SO_2R_3$; silyl ($Si(R_3)_3$); trialkylsiloxyl ($-OSi(R_3)_3$); trialkoxysiloxyl ($-OSi(OR_3)_3$).

Where appropriate, the compounds may be reacted with a quaternizing agent to afford the quaternary ammonium, sulfonium or phosphonium salts, e.g.,

$$RCH_2R_1-NH_2 + 3CH_3Cl$$
$$\downarrow$$
$$RCH_2R_1\ N_+(CH_3)_3$$
$$Cl^-$$

The end-functionalized polymer compositions of the invention have a number average molecular weight of between about 300 and 7500. More than 75% of the chains possess an end-functionalized group. Preferably, 85% or more of the chains possess an end-functionalized group.

In general, the novel compositions of the invention are prepared by chemical modification of Unilin™ alcohols and Unithox™ oxyalkylated alcohols which are commercially available from Petrolite Specialty Polymers Group of Petrolite Corporation.

The alcohols, whether or not oxyalkylated, which may be used as the starting materials for the compositions prepared in accordance with this invention are a mixture of primary alcohols of varying chain lengths with an average or mean chain length of from about 20 to about 500 carbon atoms. In this mixture, at least 75% of the chains contain are alcohols, the balance consisting of alkanes. The mixtures have a polydispersity of 1.04 to 1.20 and the alcohols are represented by the following formula:

$RCH_2[Y(R_1O)_{n-1}]_mR_1OH$ (4)

wherein R, Y, $R_1$, n and m are defined above in Formula (1).

In general, the end-functionalized polymers of the invention are prepared by subjecting the polymeric, primary alcohol or oxyalkylated alcohol or its thiol counterpart to reactions known in the art, e.g., halogenation, oxidation, oxidation and subsequent esterification, nitration, sulfonation and the like. The reactions which result in end-functionalization of the alcohols are, however, not simple extrapolations of the known reactions of the lower primary alcohols. Thus, the low molecular weight alcohols of the prior art are liquids or low melting solids. They have substantial solubility in many common organic solvents. Some are even soluble in water. In sharp contrast, the polymer alcohol and thiol starting materials used to prepare the novel compounds of the invention are solids with melting points ranging from about 70° C to about 130° C and higher. The polyethylene alcohols have little solubility in water or organic solvents. Unlike the low molecular weight primary alcohols, it is not possible to react the starting materials described herein at temperatures below about 60° C.

Table I is a diagrammatic illustration of the many novel derivatives which can be made from the starting materials of Formula 4:

TABLE 1

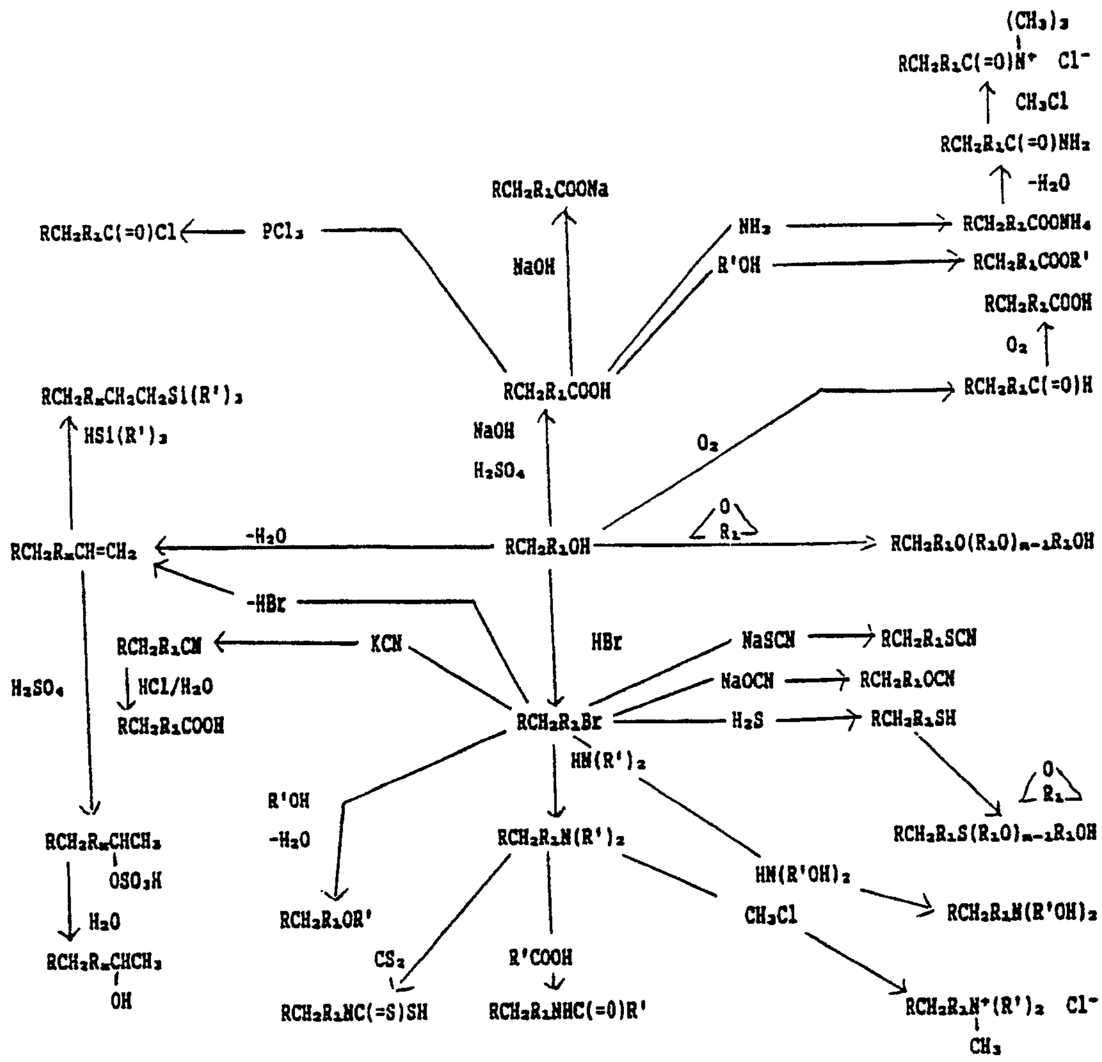


In Table 1, R′ in an acid or alcohol reactant is used to differentiate from the R and $R_1$ of the starting alcohol. R′ represents an aliphatic, cycloaliphatic, aromatic or heterocyclic group. Further, $R_x$ is used to indicate $R_1$ less $-CH_2CH_2-$, e.g. $R_1 = -CH_2CH_2CH_2-$ and $R_x = -CH_2-$.

The following examples illustrate specific embodiments of the invention, including the best means for practicing the invention, but it is understood that the examples are illustrative only and the invention is not to be limited thereby.

## Example 1

### Synthesis of Polyethylene Bromide

To a glass-lined reactor was added 100 parts of Unilin primary alcohol having a number average molecular weight of 700. Heat was applied to 140° C. to melt the alcohol and approximately 40 parts HBr gas was added to the reactor and the contents were stirred for two hours. The molten product was successively washed with water, aqueous $Na_2CO_3$ and water to obtain the desired polyethylene bromide. The product was characterized by $^{13}C$ NMR and GC/MS.

It is contemplated that the same reaction performed on an ethylene/α-olefin copolymer alcohol would afford the corresponding copolymer derivative.

Similarly, it is contemplated that substitution of a polyethylene thiol or ethylene/α-olefin thiol would afford the corresponding derivative of the thiol.

## Example 2

### Synthesis of Polyethylene Iodide

To a 3-necked glass flask were added 100 parts of polyethylene alcohol (Mn = 425) and 40 parts of phosphorus triiodide. The flask was heated to 110° C to melt the alcohol and the contents were stirred for 2 hours. The contents were then diluted with 100 parts toluene. 100 parts water were carefully introduced into the flask. The two phase mixture was stirred for 15 minutes and the water layer was discarded. The organic layer was once washed with 50 parts water. Toluene was vacuum distilled to obtain the desired product.

It is contemplated that the same reaction performed on an ethylene/α-olefin copolymer alcohol would afford the corresponding copolymer derivative.

Similarly, it is contemplated that substitution of a polyethylene thiol or ethylene/α-olefin thiol would afford the corresponding derivative of the thiol.

## Example 3

### Synthesis of Polyethylene Diethylamine

100 parts polyethylene bromide as prepared in Example 1 (Mn = 752), 100 parts toluene, and 20 parts diethylamine were added to a pressure reactor and the contents were heated to 130° C. The mixture was stirred at 130° C for 6 hours. The mixture was cooled at 100° C and a solution containing 20 parts NaOH and 100 parts water were added to the reactor. After stirring for 20 minutes at 130° C, the aqueous layer was removed and discarded. The organic layer was washed with 100 parts water. The desired product was obtained by vacuum distillation of toluene from the organic layer.

It is contemplated that the same reaction performed on an ethylene/α-olefin copolymer bromide would afford the corresponding copolymer derivative.

## Example 4

### Synthesis of Polyethylene Carboxylic Acid

To the reactor were added 200 parts commercially available polyethylene alcohol (Mn = 420, purity, 86%), 27 parts NaOH pellets. The reactor was connected to an oil bubbler and the reaction was run at atmospheric pressure. Progress of the reaction was monitored by evolution of $H_2$ gas. The reactor was heated to 300 °C and the mixture was stirred using a mechanical stirrer. Once the contents were molten, vigorous evolution of $H_2$ was noticed. After 3 hours, evolution of hydrogen essentially stopped. The reactor mass was cooled to 120 °C and 150 parts toluene were introduced into the reactor. Also added to the reactor were 20cc concentrated $H_2SO_4$. The mixture was stirred for 1 hour at 120 °C and filtered through a filter bag. The organic layer was washed into water and the product was isolated by vacuum stripping the solvent from the organic layer. From $^{13}C$ NMR data, essentially all of the alcohol was converted to acid functionality.

It is contemplated that the same reaction performed on an ethylene/α-olefin copolymer alcohol would afford the corresponding copolymer derivative.

## Example 5

### Synthesis of Polyethylene Chloride

To a 3-necked flask were added 100 parts polyethylene alcohol (Mn = 425). The flask was heated to 140 °C and HCl gas was bubbled through the molten alcohol while stirring. After 2 hours, the HCl gas inlet was closed and 150 parts toluene were added to the flask and the solution temperature was adjusted to 110 °C. The organic layer was washed with $H_2O$ twice to remove free HCl from the product. The desired polyethylene chloride was obtained by vacuum stripping the toluene from the organic layer. From $^{13}C$ NMR data, the conversion of the alcohol to the desired chloride was >95%.

It is contemplated that the same reaction performed on an ethylene/α-olefin copolymer alcohol would afford the corresponding copolymer derivative.

Similarly, it is contemplated that substitution of a polyethylene thiol or ethylene/α-olefin thiol would afford the corresponding derivative of the thiol.

## Example 6

### Synthesis of Polyethylene Diethanolamine

To a reactor were added 100 parts polyethylene bromide (see Example 1), 42 parts diethanolamine and 16 parts $Na_2CO_3$. The contents were stirred in a closed system at 140-150 °C for 4 hours. The contents were then cooled to 110 °C and 100 parts toluene and 100 parts water were added to the flask. The mixture was stirred at 110 °C for 1 hour. Stirring was then stopped and the aqueous layer was separated and discarded. The organic layer was washed with a 20% solution of NaCl in water. The desired product was obtained by vacuum stripping the solvent from the organic layer. $^{13}C$ NMR spectrum of the product showed complete conversion of the starting bromide into the diethanolamine functional product.

It is contemplated that the same reaction performed on an ethylene/α-olefin copolymer bromide would afford the corresponding copolymer derivative.

## Example 7

### Synthesis of Ethoxylated Polyethylene Alcohol

To a reactor were added 100 parts polyethylene alcohol and 7 parts sodium hydride. The reactor was heated to 140 °C to melt the alcohol and the contents were stirred. To the reactor were added 50 parts ethylene oxide over a period of 1 hour. The desired product was obtained by filtering the molten reactor mass through a filter bag.

It is contemplated that the same reaction performed on an ethylene/α-olefin copolymer alcohol would afford the corresponding copolymer derivative.

Similarly, it is contemplated that substitution of a polyethylene thiol or ethylene/α-olefin thiol would afford the corresponding derivative of the thiol.

## Example 8

### Synthesis of Bromide of Ethoxylated Polyethylene Alcohol

In the manner of Example 1, the ethoxylated polyethylene alcohol of Example 7 is reacted with HBr gas to afford the bromide derivative of the ethoxylated alcohol.

It is contemplated that the same reaction performed on an ethylene/α-olefin copolymer alcohol would afford the corresponding copolymer derivative.

Similarly, it is contemplated that substitution of a polyethylene thiol or ethylene/α-olefin thiol would afford the corresponding derivative of the thiol.

## Example 9

### Synthesis of Polyethylene Thiol

Equimolar amounts of polyethylene bromide and NaSH are reacted in the presence of a phase transfer catalyst to afford the thiol derivative.

## Example 10

### Synthesis of Ethoxylated Polyethylene Thiol

In accordance with the procedure of Example 7, polyethylene thiol is similarly reacted with ethylene oxide to afford the ethoxylated polyethylene thiol.

It is contemplated that the same reaction performed on an ethylene/α-olefin copolymer alcohol would afford the corresponding copolymer derivative.

Similarly, it is contemplated that substitution of a polyethylene thiol or ethylene/α-olefin thiol would afford the corresponding derivative of the thiol.

The physical properties for the polyethylenes of Examples 1, 3, 4 and 6 are shown in Table 2.

TABLE 2

| Physical Properties of End-Functional Polyethylenes | | | | |
|---|---|---|---|---|
| | Example 4 | Example 1 | Example 3 | Example 6 |
| Vis., cps, 98.9 °C, ASTM D-3236 | 10.5 | 6.6 | 9.0 | 2.0 |
| Color, ASTM D-1500 | 0.5+ | 4.0 | 3.0 | - |
| Solid point, °C, ASTM D-938 | 82 | 77 | 74 | 78 |
| Melting point, °C, ASTM D-127 | 90 | 84 | 82 | 88 |
| Pen*, DMM, ASTM D-1321 @25 °C | 2.5 | 23 | 28 | 12.5 |
| @69 °C | 53 | >300 | >300 | - |
| Mn** | 436 | 482 | 468 | 492 |

*Penetration
**Number average molecular weight

As seen in Figure 1, the melting point of an end-functionalized polyethylene can be varied by varying the functional group.

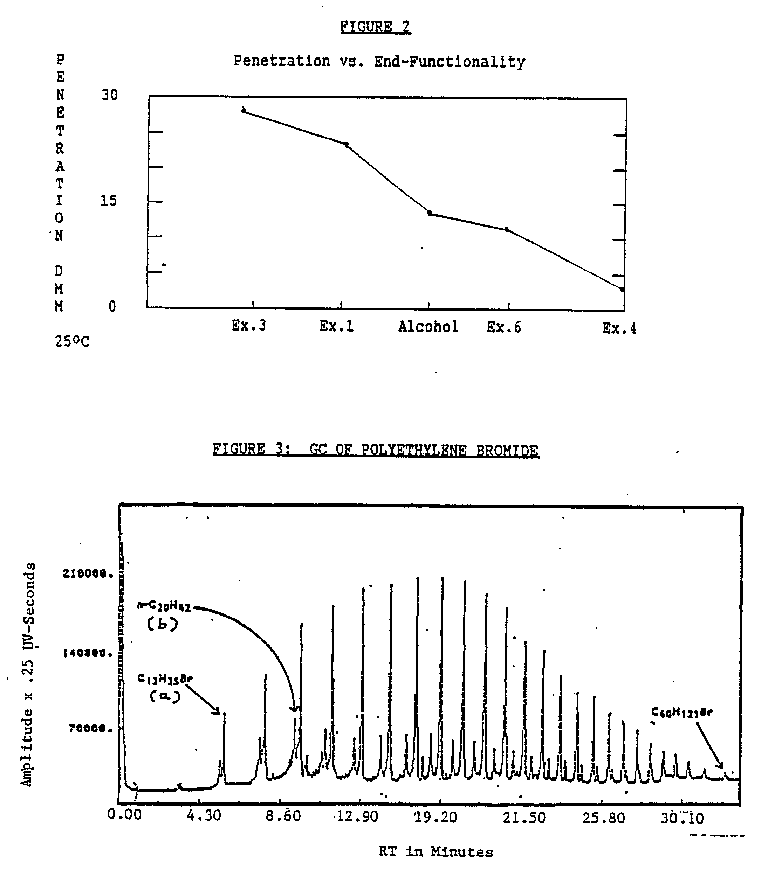

Penetration number is a measure of softness of a low molecular polyethylene. The higher the penetration number, the greater is the softness of the polyethylene. As can be seen in Figure 2, penetration of the low molecular weight polyethylene can be varied by varying the end-functional group.

The unique composition of the end-functional polyethylenes can be best illustrated with a gas chromatograph as in Figure 3.

Figure 3 shows two families of peaks; series "a" (tall peaks) and series "b" (short peaks). The peaks in each series differ by two carbon numbers. Structural assignments in Figure 3 are based on mass spectra (GC/MS) of the individual peaks. Quantitative determination of the amount of the end-functional polyethylene chains can easily be done by comparing corrected peak intensities of the functional and non-functional components. It was found that about 85% of the chains possess an end-functional group while the remaining 15% chains are normal alkanes. The GC shown in Figure 3 is typical for the polyethylene derivatives. The GC for ethylene/$\alpha$-olefin copolymer would be similar. All polyethylene derivatives tested possess essentially identical carbon chain lengths and carbon chain distribution.

While the illustrative embodiments of the invention have been described here and above with particularity, it will be understood that various other modifications will be apparent to and can be readily made by those skilled in the art without departing from the spirit and scope of the invention. Accordingly, it is not intended that the scope of the claims appended hereto be limited to the examples and description set forth herein but rather that the claims be construed as encompassing all of the features of patentable novelty which reside herein, including all features which would be treated as equivalents thereof by those skilled in the art to which the invention pertains.

## Claims

1. Composition characterized by the formula
$RCH_2R_1X$
wherein R represents a polyethylene radical having an average chain length of from about 20 to about 500 carbon atoms and a polydispersity of 1.04 to 1.20; $R_1$ represents a saturated hydrocarbon radical having 2 to about 20 carbon atoms; and X represents a functional group other than a hydroxyl, ester, phosphate or phosphite group.
2. Composition of claim 1 wherein X represents a halogen radical.
3. Composition of claim 1 wherein X represents an alkanolamine radical.
4. Composition of claim 1 wherein X represents a carboxyl radical.
5. Composition of claim 1 wherein X represents a thiol radical.
6. Composition of claim 1 wherein X represents an amine radical.
7. Composition of claim 1 wherein X represents a quaternized amine radical.
8. Composition of claim 1 wherein X represents an amide radical.
9. Composition of claim 1 wherein X represents a quaternized dialkylamine radical.
10. Composition of claim 1 wherein X represents an amine oxide radical.
11. Composition of claim 1 wherein X represents a silyl radical.

12. Composition of claim 1 wherein X represents a trialkylsiloxyl radical.
13. Composition of claim 1 wherein X represents a trialkoxysiloxyl radical.
14. Composition characterized by the formula

$RCH_2Y(R_1O)_{n-1}R_1X$

wherein R represents a polyethylene radical having an average chain length of from about 20 to about 500 carbon atoms and a polydispersity of 1.04 to 1.20; $R_1$ represents a saturated hydrocarbon radical having 2 to about 20 carbon atoms; X represents a functional group other than a hydroxyl group; Y represents oxygen or sulfur; and n represents 2 to about 100.
15. Composition of claim 14 wherein X represents a halogen radical.
16. Composition of claim 14 wherein X represents an alkanolamine radical.
17. Composition of claim 14 wherein X represents a carboxyl radical.
18. Composition of claim 14 wherein X represents a thiol radical.
19. Composition of claim 14 wherein X represents an amine radical.
20. Composition of claim 14 wherein X represents a quaternized amine radical.
21. Composition of claim 14 wherein X represents an amide radical.
22. Composition of claim 14 wherein X represents a quaternized dialkylamine radical.
23. Composition of claim 14 wherein X represents an amine oxide radical.
24. Composition of claim 14 wherein X represents a silyl radical.
25. Composition of claim 14 wherein X represents a trialkylsiloxyl radical.
26. Composition of claim 14 wherein X represents a trialkoxysiloxyl radical.
27. Composition of claim 14 wherein X represents an ester radical.
28. Composition of claim 14 wherein X represents a phosphate radical.
29. Composition of claim 14 wherein X represent a phosphite radical.
30. Composition characterized by the formula

$RCH_2[Y(R_1O)_{n-1}]_mR_1X$

wherein R represents an ethylene/α-olefin copolymer radical having an average chain length of from about 20 to about 500 carbon atoms and a polydispersity of 1.04 to 1.20; $R_1$ represents a saturated hydrocarbon radical having 2 to about 20 carbon atoms; X represents a functional group other than a hydroxyl group; Y represents oxygen or sulfur; n represents 2 to about 100; and m represents zero or 1.
31. Composition of claim 30 wherein Y is oxygen.
32. Composition of claim 30 wherein Y is sulfur.
33. Composition of claim 31 herein m is zero.
34. Composition of claim 31 wherein m is one.
35. Composition of claim 32 wherein X represents a halogen radical.
36. Composition of claim 33 wherein X represents an alkanolamine radical.
37. Composition of claim 33 wherein X represents a carboxyl radical.
38. Composition of claim 33 wherein X represents a thiol radical.
39. Composition of claim 33 wherein X represents an amine radical.
40. Composition of claim 33 wherein X represents a quaternized amine radical.
41. Composition of claim 33 wherein X represents an amide radical.
42. Composition of claim 33 wherein X represents a quaternized dialkylamine radical.
43. Composition of claim 33 wherein X represents an amine oxide radical.
44. Composition of claim 33 wherein X represents silyl radical.
45. Composition of claim 33 wherein X represents a trialkylsiloxyl radical.
46. Composition of claim 33 wherein X represents a trialkoxysiloxyl radical.
47. Composition of claim 33 wherein X represents an ester radical.
48. Composition of claim 33 wherein X represents a phosphate radical.
49. Composition of claim 33 wherein X represents a phosphite radical.
50. Composition of claim 34 wherein X represents a halogen radical.
51. Composition of claim 34 wherein X represents an alkanolamine radical.
52. Composition of claim 34 wherein X represents a carboxyl radical.
53. Composition of claim 34 wherein X represents a thiol radical.
54. Composition of claim 34 wherein X represents an amine radical.
55. Composition of claim 34 wherein X represents a quaternized amine radical.
56. Composition of claim 34 wherein X represents an amide radical.
57. Composition of claim 34 wherein X represents a quaternized dialkylamine radical.
58. Composition of claim 34 wherein X represents an amine oxide radical.
59. Composition of claim 34 wherein X represents a silyl radical.

60. Composition of claim 34 wherein X represents a trialkylsiloxyl radical.
61. Composition of claim 34 wherein X represents a trialkoxysiloxyl radical.
62. Composition of claim 34 wherein X represents an ester radical.
63. Composition of claim 34 wherein X represents a phosphate radical.
64. Composition of claim 34 wherein X represents a phosphite radical.
65. Composition of claim 32 wherein m is zero.
66. Composition of claim 32 wherein m is one.
67. Composition of claim 65 wherein X represents a halogen radical.
68. Composition of claim 65 wherein X represents an alkanolamine radical.
69. Composition of claim 65 wherein X represents a carboxyl radical.
70. Composition of claim 65 wherein X represents a thiol radical.
71. Composition of claim 65 wherein X represents an amine radical.
72. Composition of claim 65 wherein X represents a quaternized amine radical.
73. Composition of claim 65 wherein X represents an amide radical.
74. Composition of claim 65 wherein X represents a quaternized dialkylamine radical.
75. Composition of claim 65 wherein X represents an amine oxide radical.
76. Composition of claim 65 wherein X represents a silyl radical.
77. Composition of claim 65 wherein X represents a trialkylsiloxyl radical.
78. Composition of claim 65 wherein X represents a trialkoxysiloxyl radical.
79. Composition of claim 65 wherein X represents an ester radical.
80. Composition of claim 65 wherein X represents a phosphate radical.
81. Composition of claim 65 wherein X represent a phosphite radical.
82. Composition of claim 66 wherein X represents a halogen radical.
83. Composition of claim 66 wherein X represents an alkanolamine radical.
84. Composition of claim 66 wherein X represents a carboxyl radical.
85. Composition of claim 66 wherein X represents a thiol radical.
86. Composition of claim 66 wherein X represents an amine radical.
87. Composition of claim 66 wherein X represents a quaternized amine radical.
88. Composition of claim 66 wherein X represents an amide radical.
89. Composition of claim 66 wherein X represents a quaternized dialkylamine radical.
90. Composition of claim 66 wherein X represents an amine oxide radical.
91. Composition of claim 66 wherein X represents a silyl radical.
92. Composition of claim 66 wherein X represents a trialkylsiloxyl radical.
93. Composition of claim 66 wherein X represents a trialkoxysiloxyl radical.
94. Composition of claim 66 wherein X represents an ester radical.
95. Composition of claim 66 wherein X represents a phosphate radical.
96. Composition of claim 66 wherein X represent a phosphite radical.
97. Polyethylene characterized by a polydispersity of 1.04 to 1.20 and a single functional terminal radical selected from the group consisting of halogen, alkanolamine, carboxyl, thiol, amino, quaternized amine, amide, quaternized dialkylamine, amine oxide, silyl, siloxyl and alkoxysiloxyl radicals.
98. An ethylene/$\alpha$-olefin copolymer characterized by a polydispersity of 1.04 to 1.20 and a single functional terminal radical selected from the group consisting of halogen, phosphate, phosphite, alkanolamine, carboxyl, ester, thiol, amino, quaternized amine, amide, quaternized dialkylamine, amine oxide, silyl, siloxyl and alkoxylsiloxyl radicals.
99. An alkoxylated polyethylene characterized by a polydispersity of 1.04 to 1.20 and a single functional terminal radical selected from the group consisting of halogen, phosphate, phosphite, alkanolamine, carboxyl, ester, thiol, amino, quaternized amine, amide, quaternized dialkylamine, amine oxide, silyl, siloxyl and alkoxylsiloxyl radicals.

FIGURE 1

Melting Point vs. End-Functionality

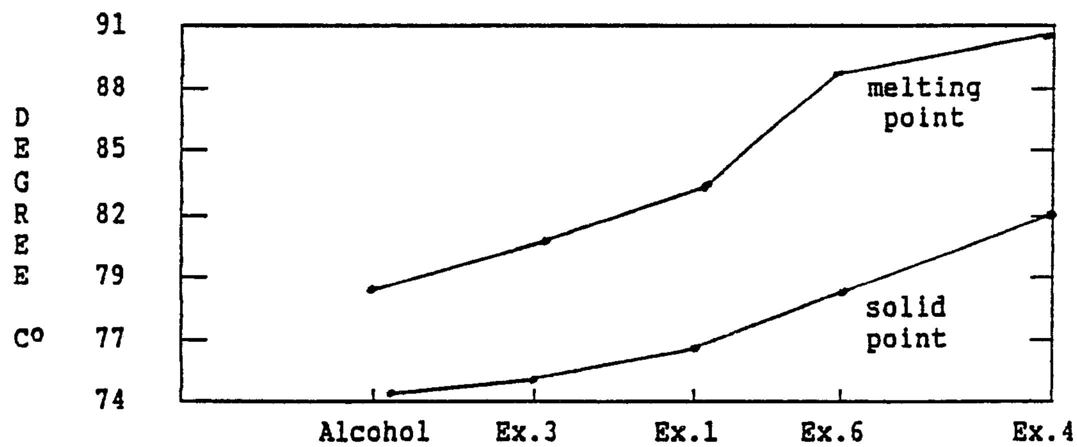

FIGURE 2

Penetration vs. End-Functionality

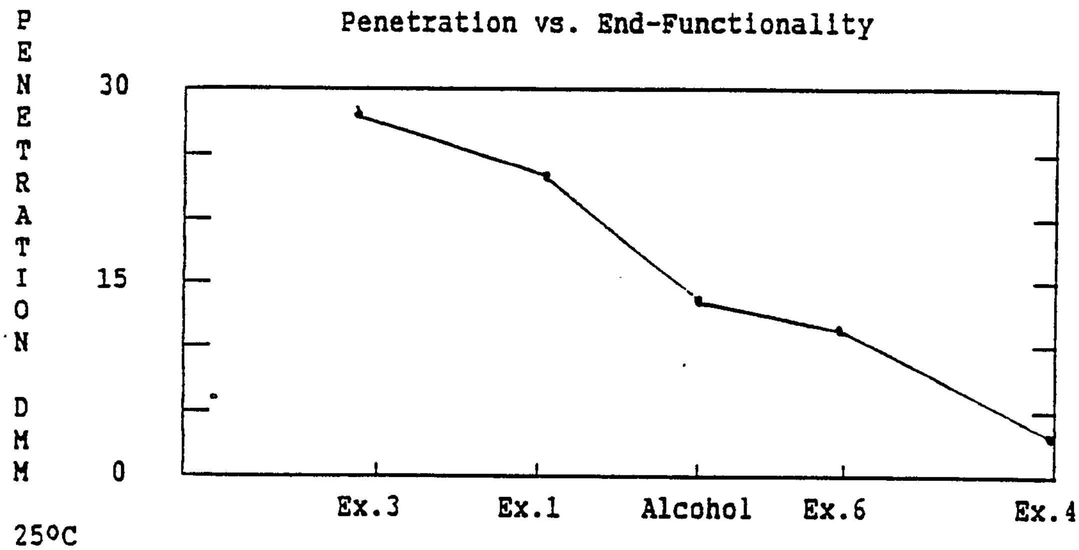


FIGURE 3: GC OF POLYETHYLENE BROMIDE